# EUROPÄISCHE PATENTSCHRIFT

(11) **EP 1 106 394 B1**
(45) Veröffentlichungstag und Bekanntmachung des Hinweises auf die Patenterteilung: **03.11.2004**
(21) Anmeldenummer: 00125934.0
(22) Anmeldetag: 28.11.2000
(51) Int. Cl.: B60C 11/11, B60C 11/12

(54) **Fahrzeugluftreifen**
Vehicle tire
Bandage pneumatique pour véhicule

(30) Priorität: 02.12.1999 DE 19957914
(43) Veröffentlichungstag der Anmeldung: 13.06.2001
(73) Patentinhaber: Continental Aktiengesellschaft, 30165 Hannover (DE)
(72) Erfinder: Dörrie, Helge, 30823 Garbsen (DE); Diensthuber, Franz, 30559 Hannover (DE)

(56) Entgegenhaltungen:
- EP-A- 0 729 854
- EP-A- 0 788 899
- AT-B- 404 341

## Beschreibung

Die Erfindung betrifft einen Fahrzeugluftreifen, insbesondere für den Einsatz unter winterlichen Fahrbedingungen, mit einem laufrichtungsgebunden gestalteten Laufstreifenprofil, welches durch eine in Umfangsrichtung verlaufend zentrale Umfangsnut, durch weitere Umfangsnuten und durch Quernuten in je eine Schulterblockreihe und in zwei mittlere Blockreihen gegliedert ist, wobei in den einzelnen Blöcken jeweils eine Vielzahl von zumindest Großteils zickzack- oder wellenförmig ausgeführten, parallel zueinander und im Wesentlichen in Profilquerrichtung verlaufenden Einschnitten vorgesehen ist.

PKW-Winterreifen mit derart ausgeführten Laufstreifenprofilen sind in verschiedenen Ausführungsvarianten bekannt. Auch eine Anzahl von Patenten und Patentanmeldungen befasst sich mit besonderen Ausgestaltungen solcher Laufstreifenprofile. Aus der EP-A-0 485 883 ist beispielsweise ein Fahrzeugluftreifen der eingangs genannten Art bekannt, dessen laufrichtungsgebunden gestaltetes Laufstreifenprofil derart in Blöcken gegliedert ist, dass sowohl die Blöcke in den mittleren Blockreihen als auch die Blöcke in den Schulterblockreihen in Umfangsrichtung durch relativ breite Quernuten komplett voneinander getrennt sind. Der Verlauf bzw. die Anordnung der schmalen Einschnitte in den einzelnen Profilblöcken ist so vorgenommen, dass sich jeder Einschnitt aus drei Abschnitten - einem ersten, einem zweiten und einem dazwischen liegenden Abschnitt - zusammensetzt, wobei beim Abrollen des Reifens jeweils der erste Abschnitt vor dem mittleren Abschnitt in die Kontaktfläche eintritt und der zweite Abschnitt die Kontaktfläche mit dem Untergrund zuletzt verlässt. Durch diese Ausgestaltung wird auf gute Brems- und Lenkeigenschaften auf nassen Fahrbahnen und auf einen regelmäßigen Abrieb des Profils abgezielt. Das Profil weist eine konventionelle Gliederung in Einzelblöcke und somit eine insgesamt etwas weiche, eher unstabile Profilstruktur auf, die erfahrungsgemäß das Fahrverhalten beeinträchtigt, insbesondere was das Ansprechverhalten auf Lenkkräfte und die Geradeauslaufsfabilität auf nassen und trockenen Fahrbahnen betrifft.

Aus der AT-B 404 341 ist ein PKW-Winterreifen mit einem laufrichtungsgebunden gestalteten Laufstreifenprofil bekannt, welches sich ebenfalls aus einer Schulterblockreihe und zwei mittleren Blockreihen zusammensetzt. Hier ist vorgesehen, dass in den beiden mittleren Blockreihen jeweils zwei in Umfangsrichtung benachbarte Blöcke an ihren der zentralen Umfangsnut benachbarten Bereichen miteinander verbunden sind. In diese paarweise miteinander verbundenen Blöcke ragt ausgehend von jener Umfangsnut, die diese Blöcke von den Schulterblöcken trennt, annähernd mittig je eine Sacknut. Durch diese Maßnahmen wird zwar die Profilsteifigkeit im Mittelbereich des Laufstreifens erhöht, es werden jedoch auch Ungleichmäßigkeiten in der Profilstruktur erzeugt, die eine ungleichmäßige Profilsteifigkeit zur Folge haben und die strömungstechnisch nicht optimal sind.

Die EP-A1-0 788 899, welche als nächstliegender Stand der Technik betrachtet wird, zeigt einen Fahrzeugluftreifen, insbesondere für den Einsatz unter winterlichen Fahrbedingungen, mit einem laufrichtungsgebunden gestalteten Laufstreifenprofil, welches durch eine in Umfangsrichtung verlaufende zentrale Umfangsnut, durch weitere Umfangsnuten und durch Quernuten in zwei Schulterblockreihen und in zwei mittlere Blockreihen gegliedert ist, wobei in den einzelnen Blöcken jeweils eine Vielzahl von wellenförmig ausgeführten, parallel zueinander und im Wesentlichen in Profilquerrichtung verlaufenden Einschnitten vorgesehen sind, wobei die Blöcke der zwei mittleren Blockreihen in ihren der zentralen Umfangsnut benachbarten Bereichen in Umfangsrichtung aneinander gekoppelt sind, und einen etwa 25% der Gesamtfläche des betreffenden Blocks einnehmenden und zur zentralen Umfangsnut benachbarten streifenförmigen Bereich aufweisen, wo ausschließlich gerade verlaufende Einschnittabschnitte vorgesehen sind.

Ziel der Erfindung ist es, bei einem Fahrzeugluftreifen der eingangs genannten Art die Winterfahreigenschaften, insbesondere die Traktions- und Bremseigenschaften auf schneeigen oder matschigen Fahrbahnen, aber gleichzeitig auch das Fahrverhalten auf nassen und trockenen Fahrbahnen, insbesondere das Ansprechen auf Lenkkräfte und die Geradeauslaufstabilität, zu verbessern.

Gelöst wird die gestellte Aufgabe erfindungsgemäß durch einen Fahrzeugluftreifen nach Anspruch 1.

Die Bereiche mit gerade verlaufenden Einschnitten bzw. Einschnittabschnitten sind für das Traktions- und Bremsverhalten auf matschigem oder schneeigem Untergrund von besonderem Vorteil, da derartige Einschnitte ein gutes Öffnungsvermögen besitzen. Die zickzack- oder wellenförmigen Einschnitte oder Einschnittabschnitte haben eine die Blockstabilität erhöhende Abstützwirkung. Dies ist für das Fahrverhalten, sowohl auf nassem als auch auf trockenem Untergrund, von Vorteil. Die Anbindung der Blöcke in den beiden mittleren Blockreihen ist ebenfalls eine Maßnahme, die zu einer Versteifung des mittleren Bereichs des Laufstreifenprofils beiträgt. Dies ist wesentlich für die Quersteifigkeit des Profils und somit insbesondere für das Ansprechen auf Lenkkräfte.

Bei einer bevorzugten Ausführungsform der Erfindung weisen die streifenförmigen Bereiche in den Blöcken der mittleren Blockreihen eine größere Breite auf als die streifenförmigen Bereiche in den Blöcken der Schulterblockreihen. Dadurch wird dem Umstand Rechnung getragen, dass gerade im Mittelbereich des Laufstreifens ein höherer Anteil von gerade verlaufenden Einschnitten bzw. Einschnittabschnitten für das Traktions- und Bremsverhalten auf winterlichen Fahrbahnen von Vorteil ist.

Dabei wird die Ausführung insbesondere so getroffen, dass die streifenförmigen Bereiche in den Blöcken der mittleren Blockreihen einen größeren Teil der Gesamtfläche der Blöcke bedecken, als die streifenförmigen Bereiche in den Blöcken der Schulterblockreihen.

Das Laufstreifenprofil ist bezüglich der Winterfahreigenschaften und des Fahrverhaltens auf trockenen und nassen Fahrbahnen dann besonders ausgewogen gestaltet, wenn die streifenförmigen Bereiche in den Blöcken der mittleren Blockreihen zwischen 25 und 40%, insbesondere zwischen 30 und 35%, der Gesamtfläche der Blöcke bedecken und wenn die streifenförmigen Bereiche in den Blöcken der Schulterblockreihen 20 bis 30%, insbesondere bis zu 25%, der Gesamtfläche der Blöcke bedecken.

Zweckmäßigerweise wird ferner zur Kopplung der Blöcke der mittleren Blockreihen jeweils zwischen zwei benachbarten Blöcken eine schmale und mit einer gegenüber der normalen Profiltiefe geringeren Tiefe ausgeführte Rille vorgesehen.

Die Schulterblöcke können dadurch stabilisiert werden, wenn die geraden Einschnittabschnitte zumindest über einen Teil ihrer Erstreckung eine geringere Tiefe aufweisen als die an sie anschließenden zickzackförmig gestalteten Bereiche.

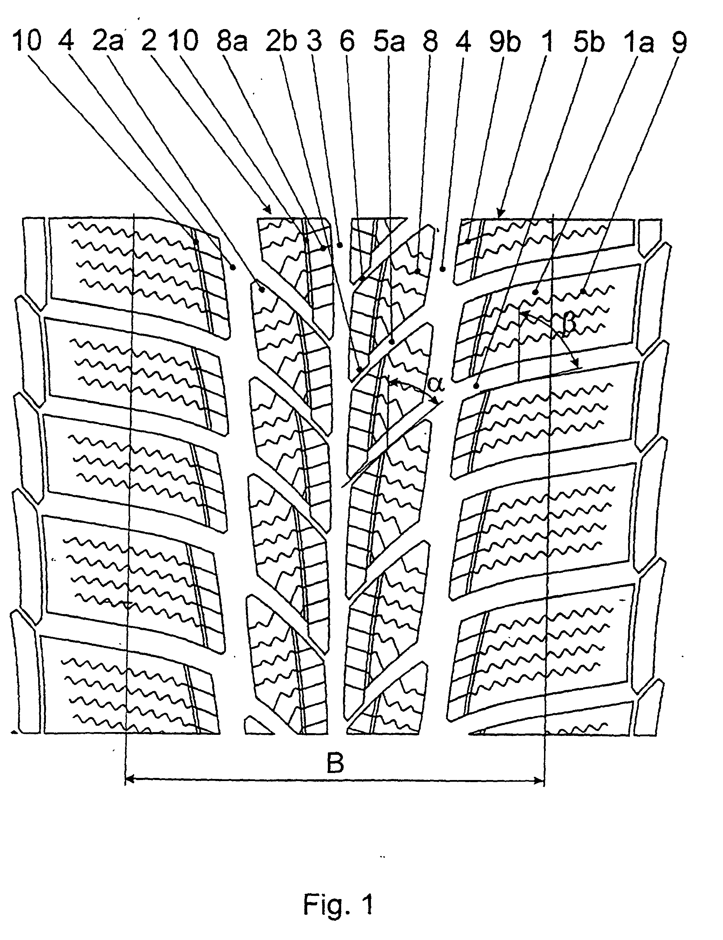

Weitere Merkmale, Vorteile und Einzelheiten der Erfindung werden nun anhand der Zeichnung, die ein Ausführungsbeispiel darstellt, näher beschrieben. In der einzigen Zeichnungsfigur, der Fig. 1, ist eine Draufsicht auf eine Teilabwicklung eines Laufstreifenprofils dargestellt.

Das in der Zeichnungsfigur gezeigte Laufstreifenprofil ist insbesondere für PKW-Winterreifen vorgesehen. In der nun folgenden Beschreibung wird auf die Breite B des Laufstreifens Bezug genommen, die seiner Breite in der Bodenaufstandsfläche unter normalen Betriebsbedingungen (gemäß E.T.R.T.O. Standards) entspricht.

Das dargestellte Laufstreifenprofil ist ein laufrichtungsgebünden und durch den gewählten Verlauf der Quernuten gepfeilt gestaltetes Profil. Erfindungsgemäß ausgeführte Reifen werden derart am Fahrzeug montiert, dass die im Laufstreifenmittelbereich liegenden Enden der Quernuten beim Abrollen des Reifens zuerst in die Kontaktfläche mit dem Untergrund eintreten.

Das Laufstreifenprofil setzt sich aus Profilstrukturen zusammen, die zwei Schulterblockreihen 1 und zwei mittlere Blockreihen 2 umfassen. Die beiden mittleren Blockreihen 2 sind durch eine zentrale, beim dargestellten Ausführungsbeispiel entlang der Äquatorlinie in Umfangsrichtung umlaufende Umfangsnut 3 voneinander getrennt. Zwei weitere, breite Umfangsnuten 4 trennen jeweils eine der Schulterblockreihen 1 von der benachbarten mittleren Blockreihe 2. Die Blöcke 2a in den beiden mittleren Blockreihen 2 sind in Draufsicht im Wesentlichen parallelogrammförmig gestaltet. Zwischen den einzelnen in Umfangsrichtung benachbarten Blöcken 2a verläuft jeweils ein Quernutabschnitt 5a, der jedoch nicht in die zentrale Umfangsnut 3 einmündet, sondern an welchen eine schmale Rille 6 anschließt. Die gegenüber der Länge der Quernutabschnitte 5a kurz ausgeführten Rillen 6 haben eine Breite von 1 bis 1,5 mm und eine gegenüber normalen Profiltiefe, die in der Größenordnung von 7 bis 8 mm gewählt wird, geringere Tiefe. Ihre Tiefe beträgt zwischen 3 und 5 mm. Jede Rille 6 wird durch einen am Block 2 ausgebildeten Blockansatz 2b, der zum benachbarten Block 2 die Rille 6 frei lässt, gebildet. Sowohl die Rillen 6 als auch die Quernutabschnitte 5a verlaufen unter einem Winkel α in der Größenordnung von 40° zur Umfangsrichtung des Laufstreifenprofils. Die Größe des Winkels a kann variiert werden, wird jedoch in einem Bereich von 30 bis 60° gewählt.

Auch die Schulterblöcke 1a sind von ihrer Form einem Parallelogramm angeglichen und in Umfangsrichtung durch Quernutabschnitte 5b, die etwas breiter sind als die Quernutabschnitte 5a und über ihre Länge eine konstante Breite aufweisen, voneinander getrennt. Abweichend von der dargestellten Ausführungsform können die Quernutabschnitte 5b auch zu den Laufstreifenrändern breiter werden. Die Schulterblockreihen 1 sind gegenüber ihren benachbarten mittleren Blockreihen 2 in Umfangsrichtung etwas versetzt, wodurch sichergestellt ist, dass ein strömungstechnisch günstiges, möglichst ungehindertes Abfließen von Wasser aus dem Mittelbereich des Laufstreifens in die Umfangsnuten 4 und über die Quemutabschnitte 5b nach außen möglich ist.

Die beiden durch die zentrale Umfangsnut 3 voneinander getrennten Laufstreifenhälften sind in Umfangsrichtung ebenfalls gegeneinander in der Größenordnung einer halben Umfangserstreckung eines Blockes (Durchschnittswert) versetzt.

Die die Umfangsnuten 4 begrenzenden Kanten der Blöcke 2a und der Blöcke 1a sind gegenüber der Umfangsrichtung des Laufstreifenprofils geringfügig nach außen geneigt, der betreffende Winkel zur Umfangsrichtung beträgt in der Größenordnung von 3 bis 7°. Die Ausrichtung der betreffenden Blockkanten erfolgt parallel zueinander, sodass die Umfangsnuten 4 durch aufeinander folgende und gegenüber der Umfangsrichtung leicht schräg verlaufende Nutabschnitte geprägt sind.

Die Quernutabschnitte 5b innerhalb der Schulterblockreihen 1 verlaufen unter einem wesentlich größeren Winkel β zur Umfangsrichtung als die Quernutabschnitte 5a in den mittleren Blockreihen 2. Der Winkel β beträgt in der Größenordnung von 70 bis 90°. Durch den geschilderten Verlauf der Quernutabschnitte 5a, 5b erhält das Profil die bereits erwähnte Pfeilstruktur.

Wie dargestellt ist ferner das Laufstreifenprofil nach dem Verfahren der Pitchlängenvariation ausgelegt, um das Abrollgeräusch positiv zu beeinflussen. Wie bekannt werden dabei die Blöcke mitsamt jeweils einer der benachbarten Umfangsnuten zu einem Pitch zusammengefasst, wobei diese üblicherweise mit zwei oder drei unterschiedlichen Längen gewählt werden. Die Anordnung der Pitches über den Reifenumfang wird mittels eines geeigneten Computerprogrammes ermittelt.

Sämtliche Profilelemente des Laufstreifenprofils, demnach sämtliche Blöcke 1a, 2a, sind jeweils mit einer Vielzahl von innerhalb eines jeden Blockes 1a, 2a zumindest über einen Großteil ihrer Erstreckung zueinander parallel verlaufenden Einschnitten 8, 9 versehen.

In den Schulterblöcken 1a besitzen die Einschnitte 9 eine Erstreckung parallel zu den die Quernutabschnitte 5b begrenzenden Blockkanten und sind innerhalb jedes Blockes 1a so angeordnet, dass ihr gegenseitiger Abstand und ihr Abstand zu den erwähnten Blockkanten zumindest im Wesentlichen gleich groß ist. Über einem großen Teil ihrer Erstreckung sind die Einschnitte 9 wellenförmig bzw. zickzackförmig gestaltet, sie besitzen jedoch gerade verlaufende Einschnittabschnitte 9b, mit welchen sie in die Umfangsnuten 4 münden. Die geraden Einschnittabschnitte 9b sind in einem der Umfangsnut 4 benachbarten und in Umfangsrichtung orientierten streifenförmigen Bereich jedes Blockes 1a angeordnet. Der streifenförmige Bereich überdeckt eine Fläche von 20 bis 30%, insbesondere bis 25%, der Blockoberfläche innerhalb der Breite B. Die geraden Einschnittabschnitte 9b tragen infolge ihres guten Öffnungsvermögens zu einer Verbesserung der Traktions- und Bremseigenschaften auf schneeigem und eisigem Untergrund bei.

Die Erstreckung der Einschnitte 8 in den Blöcken 2a erfolgt im Wesentlichen quer zur längeren Diagonale der parallelogrammförmigen Blöcke 2a. In einem der zentralen Umfangsnut 3 benachbarten streifenförmigen Bereich jedes Blockes 2a sind nun ausschließlich gerade verlaufende Einschnitte 8 oder gerade verlaufende Einschnittabschnitte 8a vorgesehen. In jedem Block 2a verläuft zwar die überwiegenden Anzahl der Einschnitte 8 auch über den streifenförmigen Bereich, es gibt jedoch auch welche, die nicht bis zur zentralen Umfangsnut 3 reichen bzw. nicht bis in den streifenförmigen Bereich hinein verlaufen. Es gibt ferner auch Einschnitte 8, die ausschließlich im streifenförmigen Bereich verlaufen und somit komplett gerade ausgeführt sind.

In den Blöcken 2a der mittleren Blockreihen 2 bedeckt der streifenförmige Bereich zwischen 25 und 40%, insbesondere zwischen 30 und 35%, der Blockfläche. Die geraden Einschnittabschnitte 8a bzw. Einschnitte 8 nehmen daher in den Blöcken 2a einen größeren Teil an der Gesamtoberfläche der Blöcke 2a ein als dies in den Schulterblöcken 1a der Fall ist. Zusätzlich weisen die geraden Einschnittabschnitte 8a bzw. Einschnitte 8 eine durchschnittliche Länge auf, die größer ist als jene der Einschnittabschnitte 9a in den Schulterblöcken 1a. Damit weisen die streifenförmigen Bereiche in den Blöcken 2a eine größere Breite auf als jene in den Blöcken 1a.

Zusätzlich können die geraden Einschnittabschnitte 9b in den Schulterblöcken 1a mit einer geringeren Tiefe ausgeführt werden, als die zickzack- bzw. wellenförmigen Abschnitte der Einschnitte 9. Dadurch werden die Schulterblöcke 1a an den den Umfangsnuten 4 benachbarten Bereichen etwas versteift, die weiter innen gelegenen Bereiche der Schulterblöcke 1a sind etwas weicher. Diese Maßnahme ist für die Fahrstabilität von Vorteil.

Der Grund der Einschnitte 8 in den Blöcken 2a der mittleren Blockreihen 2 kann stellenweise angehoben werden, insbesondere in jenen Einschnitten 8, die kürzer ausgeführt sind, um eine stabilisierende Wirkung auf den jeweiligen Profilblock 2a zu erzielen.

Schmale, ca. 1 bis 1,5 mm breite und gerade ausgeführte sowie bis auf eine Tiefe von etwa 1 bis 2 mm reichende Entlüftungsnuten 10 sorgen für eine aus Geräuschgründen vorteilhafte Entlüftungsmöglichkeit für die Einschnitte 8, 9 in den Profilblöcken 1a, 2a. Zweckmäßigerweise wird der Verlauf dieser Entlüftungsnuten 10 so getroffen, dass sie die Einschnitte 8, 9 unter einem Winkel, der nahe 90° liegt, kreuzen, wobei beim dargestellten Ausführungsbeispiel die Entlüftungsnuten 10 entlang des blockinnenseitig gelegenen Randes der streifenförmigen Bereiche verlaufen.

## Patentansprüche

1. Fahrzeugluftreifen, insbesondere für den Einsatz unter winterlichen Fahrbedingungen, mit einem laufrichtungsgebunden gestalteten Laufstreifenprofil, welches durch eine in Umfangsrichtung verlaufende zentrale Umfangsnut (3), durch weitere Umfangsnuten (4) und durch Quernuten (5a, 5b) in zwei Schulterblockreihen (1) und in zwei mittlere Blockreihen (2) gegliedert ist, wobei in den einzelnen Blöcken (1a, 2a) jeweils eine Vielzahl von zumindest Großteils zickzack- oder wellenförmig ausgeführten, parallel zueinander und im Wesentlichen in Profilquerrichtung verlaufenden Einschnitten (8, 9) vorgesehen sind,
wobei
die Blöcke (2a) der mittleren Blockreihen (2) in ihren der zentralen Umfangsnut (3) benachbarten Bereichen in Umfangsrichtung aneinander gekoppelt sind, und sowohl die Blöcke (1a) der Schulterblockreihen (1) als auch die Blöcke (2a) der mittleren Blockreihen (2), profilinnseitig und den Umfangsnuten (3, 4) benachbart, einen zumindest 20% der Gesamtfläche des betreffenden Blocks einnehmenden streifenförmigen Bereich aufweisen, wo ausschließlich gerade verlaufende Einschnittabschnitte (8a, 9a) oder Einschnitte (8) vorgesehen sind, wobei sich die Gesamtfläche auf die innerhald der Breite (B) der Bodenaufstandsfläche liegende Blockoberfläche bezieht.

2. Fahrzeugluftreifen nach Anspruch 1, **dadurch gekennzeichnet, dass** die streifenförmigen Bereiche in den Blöcken (2a) der mittleren Blockreihen (2) eine größere Breite aufweisen, als die streifenförmigen Bereiche in den Blöcken (1a) der Schulterblockreihen (1).

3. Fahrzeugluftreifen nach Anspruch 1 oder 2, **dadurch gekennzeichnet, dass** die streifenförmigen Bereiche in den Blöcken (2a) der mittleren Blockreihen (2) einen größeren Teil der Gesamtfläche der Blöcke (2a) bedecken, als die streifenförmigen Bereiche in den Blöcken (1a) der Schulterblockreihen (1).

4. Fahrzeugluftreifen nach einem der Ansprüche 1 bis 3, **dadurch gekennzeichnet, dass** die streifenförmigen Bereiche in den Blöcken (2a) der mittleren Blockreihen (2) zwischen 25 und 40%, insbesondere zwischen 30 und 35%, der Gesamtfläche der Blöcke (2a) bedecken.

5. Fahrzeugluftreifen nach einem der Ansprüche 1 bis 3, **dadurch gekennzeichnet, dass** die streifenförmigen Bereiche in den Blöcken (1a) der Schulterblockreihen (1) 20 bis 30%, insbesondere bis 25%, der Gesamtfläche der Blöcke (1a) bedecken.

6. Fahrzeugluftreifen nach einem der Ansprüche 1 bis 5, **dadurch gekennzeichnet, dass** die Blöcke (2a) der mittleren Blockreihen (2) an ihren der zentralen Umfangsnut benachbarten Bereichen jeweils durch eine schmale und mit gegenüber der normalen Profiltiefe geringerer Tiefe ausgeführte Rille (6) getrennt sind.

7. Fahrzeugluftreifen nach einem der Ansprüche 1 bis 6, **dadurch gekennzeichnet, dass** die geraden Einschnittabschnitte (9b) in den Blöcken (1a) der Schulterblockreihen (1) zumindest über einen Teil ihrer Erstreckung eine geringere Tiefe aufweisen als die an sie anschließenden zickzackförmig gestalteten Einschnittabschnitte.

## Claims

1. Pneumatic vehicle tyre, especially for use in winter conditions, having a tread strip profile which is designed bound to the running direction and which is divided by a central circumferential groove (3) extending in the circumferential direction, by additional circumferential grooves (4) and by transverse grooves (5a, 5b) into two shoulder block rows and into two central block rows (2), a plurality of at least largely zigzag or undulating incisions (8,9), which extend parallel to one another and substantially in the transverse direction of the profile, being provided in each of the individual blocks (1a, 2a),
wherein the blocks (2a) of the central rows (2) are coupled to one another in the circumferential direction in their regions adjacent to the central circumferential groove (3), and both the blocks (1a) of the shoulder rows (1) and the blocks (2a) of the central rows (2), on the inside of the profile and adjacent to the circumferential grooves (3, 4), have a strip-shaped region taking up at least 20% of the total area of the respective block, where only straight incision portions (8a, 9a) or incisions (8) are provided, the total area relating to the block surface lying inside the width (B) of the ground-engaging surface.

2. Pneumatic vehicle tyre according to claim 1, **characterised in that** the strip-shaped regions in the blocks (2a) of the central rows (2) have a greater width than the strip-shaped regions in the blocks (1a) of the shoulder rows (1).

3. Pneumatic vehicle tyre according to claim 1 or 2, **characterised in that** the strip-shaped regions in the blocks (2a) of the central rows (2) cover a greater portion of the total area of the blocks (2a) than the strip-shaped regions in the blocks (1a) of the shoulder rows (1).

4. Pneumatic vehicle tyre according to one of claims 1 to 3, **characterised in that** the strip-shaped regions in the blocks (2a) of the central rows (2) cover between 25 and 40%, especially between 30 and 35% of the total area of the blocks (2a).

5. Pneumatic vehicle tyre according to one of claims 1 to 3, **characterised in that** the strip-shaped regions in the blocks (1a) of the shoulder rows (1) cover 20 to 30%, especially up to 25%, of the total area of the blocks (1a).

6. Pneumatic vehicle tyre according to one of claims 1 to 5, **characterised in that** the blocks (2a) of the central rows (2) are separated at their regions adjacent to the central circumferential groove in each case by a narrow groove (6) which is designed less deep than the normal profile depth.

7. Pneumatic vehicle tyre according to one of claims 1 to 6, **characterised in that** the straight incision portions (9b) in the blocks (1a) of the shoulder rows (1) are, at least partially, not as deep as the zigzag incision portions adjoining them.

## Revendications

1. Pneumatique de véhicule, en particulier pour l'utilisation dans des conditions hivernales de conduite, comprenant une sculpture de bande de roulement conformée de façon inhérente au sens de la marche, laquelle sculpture de bande de roulement est partagée par une rainure longitudinale centrale (3) s'étendant dans la direction circonférentielle, par d'autres rainures longitudinales (4) et par des rainures transversales (5a, 5b), en deux rangées de crampons d'épaulement (1) et en deux rangées centrales de crampons (2), où il est prévu à chaque fois, dans les différents crampons (1a, 2a), un grand nombre d'entailles (8, 9), celles-ci étant au moins en majeure partie configurées en forme de zigzag ou d'ondulation, parallèles entre elles, et s'étendant pratiquement dans la direction transversale des sculptures,
où les crampons (2a) des rangées centrales de crampons (2), dans leurs zones voisines de la rainure longitudinale centrale (3), sont couplés les uns aux autres suivant la direction circonférentielle, et aussi bien les crampons (1a) des rangées de crampons d'épaulement (1) que les crampons (2a) des rangées centrales de crampons (2) présentent, côté intérieur des sculptures et de façon voisine des rainures longitudinales (3, 4), une zone en forme de bande prenant au moins 20 % de la surface totale du crampon concerné, où il est prévu, exclusivement, des parties d'entailles (8a, 9a) ou des entailles (8) s'étendant de façon rectiligne, où la surface totale se rapporte à la surface des crampons se trouvant à l'intérieur de la largeur (B) de la surface de contact au sol.

2. Pneumatique de véhicule selon la revendication 1, **caractérisé en ce que** les zones en forme de bande présentent, dans les crampons (2a) des rangées centrales de crampons (2), une plus grande largeur que les zones en forme de bande situées dans les crampons (1a) des rangées de crampons d'épaulement (1).

3. Pneumatique de véhicule selon la revendication 1 ou 2, **caractérisé en ce que** les zones en forme de bande situées dans les crampons (2a) des rangées centrales de crampons (2) recouvrent une partie de la surface totale des crampons (2a) plus grande que celle recouverte par les zones en forme de bande situées dans les crampons (1a) des rangées de crampons d'épaulement (1).

4. Pneumatique de véhicule selon l'une quelconque des revendications 1 à 3, **caractérisé en ce que** les zones en forme de bande situées dans les crampons (2a) des rangées centrales de crampons (2) recouvrent entre 25 % et 40 %, en particulier entre 30 % et 35 % de la surface totale des crampons (2a).

5. Pneumatique de véhicule selon l'une quelconque des revendications 1 à 3, **caractérisé en ce que** les zones en forme de bande situées dans les crampons (1a) des rangées de crampons d'épaulement (1) recouvrent de 20 % à 30 %, en particulier jusqu'à 25 % de la surface totale des crampons (1a).

6. Pneumatique de véhicule selon l'une quelconque des revendications 1 à 5, **caractérisé en ce que** les crampons (2a) des rangées centrales de crampons (2), au niveau de leurs zones voisines de la rainure longitudinale centrale, sont séparés à chaque fois par une strie étroite (6) et réalisée en ayant une profondeur moins importante par rapport à la profondeur normale des sculptures.

7. Pneumatique de véhicule selon l'une quelconque des revendications 1 à 6, **caractérisé en ce que** les parties d'entailles droites (9b), dans les crampons (1a) des rangées de crampons d'épaulement (1), présentent, au moins sur une partie de leur étendue, une profondeur moins importante que les parties d'entailles en forme de zigzag qui leur font suite.
